# EUROPEAN PATENT SPECIFICATION

(11) **EP 0 418 628 B1**
(45) Date of publication and mention of the grant of the patent: **24.03.1993**
(21) Application number: 90116883.1
(22) Date of filing: 03.09.1990
(51) Int. Cl.: G21C 19/307, G21C 3/32

(54) **Enhanced debris filter bottom nozzle for a nuclear fuel assembly**
Fussstück mit verbessertem Teilchenfilter für Kernbrennelemente
Embout inférieur comportant un filtre de débris amélioré pour un assemblage de combustible nucléaire

(30) Priority: 21.09.1989 US 410574
(43) Date of publication of application: 27.03.1991
(73) Proprietor: WESTINGHOUSE ELECTRIC CORPORATION, Pittsburgh Pennsylvania 15222 (US)
(72) Inventor: Cioffi, Joseph Victor, Columbia, South Carolina 29210 (US); Kerrey, John Stephen, Columbia, South Carolina 29209 (US)
(74) Representative: Fleuchaus, Leo, Dipl.-Ing.

(56) References cited:
- EP-A- 0 213 813
- EP-A- 0 289 829
- DE-A- 3 832 910
- US-A- 4 832 905

## Description

The present invention relates generally to nuclear reactors and, more particularly, to an enhanced debris filter bottom nozzle for a nuclear fuel assembly.

During manufacture and subsequent installation or repair of components of reactor cooling systems, a diligent effort is made to assure the removal of all debris from the reactor vessel and the coolant circulating systems associated therewith. Despite elaborate procedures introduced to effectuate a thorough debris removal, experience has shown that some debris, such as metal turnings, chips, shavings and similar particles generated for instance during steam generator repair or replacement, might remain in the primary cooling system in which event it will, upon reactor start-up, become entrained in the flow of primary coolant and be carried therewith up through the flow holes in the lower core support plate, the flow passages in the bottom nozzles of fuel assemblies, and into the latter themselves where, upon reaching the lowermost fuel-rod support grids thereof, the debris entrained in the coolant flow is likely to become lodged within the spaces between the walls of the grid cells and the fuel rods extending therethrough; once thus entrapped, the debris will be induced by the coolant flow to vibrate and gyrate and, in doing so, will fret against, and in the worst case might even fret through, the cladding of the fuel rods.

There are various known techniques and devices designed to alleviate this problem. For instance, Applicant's U.S-A-4,096,032 discloses an in-core flow filter adapted to be temporarily placed over the coolant flow openings of the lower core plate during functional testing of the reactor's primary cooling system, and then, when testing is completed, to be removed therefrom together with any filtered-out debris. In addition, Applicant's EP-B-0 184 219, EP-A-0 196 611 and EP-A-0 213 813 disclose debris traps adapted to be installed within, as in EP-B-0 184 219 and EP A-0 196 611, or directly above, as in EP-A-0 213 813, the bottom nozzles of fuel assemblies, and to remain there throughout a whole fuel cycle. Finally, in Applicant's EP-A-0 311 037 and EP-A-0 289 829 there are disclosed fuel assemblies which have a debris filtering function designed directly into their bottom nozzles by, according to EP-A-0 311 037, mounting criss-cross filtering structures across relatively large cut-outs formed in an otherwise solid adapter plate of the bottom nozzle, or, according to EP-A-0 289 829, by drilling through the adapter plate of the bottom nozzle a plurality of relatively small flow passages distributed all over the adapter plate.

These earlier debris removal arrangements operate and achieve their objectives well under the range of operating conditions for which they were designed.

The present invention has for its principal objective to provide an enhanced debris-filter bottom-nozzle capable of still finer debris filtration and lending itself to being produced at reasonable cost and without detriment to its structural strength.

The invention accordingly resides in a debris filter bottom nozzle including a transverse structure which has extending therethrough a plurality of coolant flow passages sufficiently small in diameter to prevent passage of debris of a predetermined size, characterized in that said transverse structure consists of a consolidated array of cylindrical sections disposed side-by- side in substantially parallel relationship with each other and rigidly connected together.

The chief advantage of this debris filter bottom nozzle embodying the invention resides in that it enables a finer debris filtration to be obtained by reducing the diametric size and increasing the number of tubular sections used in forming the transverse structure, and that, contrary to drilling more holes through a solid bottom nozzle adapter plate and thereby removing material, an increase in the number of tubular sections employed will result in adding material to the transverse structure and, consequently, in increasing its strength. Moreover, it is easier and more economical to produce an enhanced debris filter bottom nozzle by rigidly interconnecting, e.g. brazing, a plurality of cylindrical sections than to drill a large number of small flow passages through an otherwise solid and relatively thick bottom nozzle adapter plate.

The cylindrical sections may be of at least two different diametric sizes or may all have the same diameter, depending upon such factors as, for example, the degree of debris filtration and the configuration and size desired of the consolidated array. They are at least predominantly tubular sections each defining one of said coolant flow passages therethrough, but some cylindrical solid sections may also be utilized in the array, if desired. For each control-rod guide thimble location provided in the bottom nozzle, the array preferably includes a solid bar member of larger diametric size and with a bore formed therein for receiving a lower end portion of the guide thimble associated with the particular thimble location.

Preferably, the debris filter bottom nozzle of the invention includes an open frame or peripheral enclosure defining a coolant flow space therethrough, the transverse structure being disposed within and extending across said flow space, and being connected, e.g. braze-jointed, to the peripheral enclosure.

A preferred method of fabricating the enhanced debris filter bottom nozzle of the invention includes fitting the array of cylindrical sections into the flow space defined by the peripheral enclosure, and then causing the whole assembly consisting of the enclosure and the array of cylindrical sections fit therein to be consolidated, preferably by placing it into a furnace and subjecting it to a brazing operation.

A preferred embodiment of the invention will now be described, by way of example only, with reference to the accompanying drawings in which:-
Fig. 1 is an elevational view, partly in section and with parts broken away for clarity, of a conventional nuclear fuel assembly of the kind with which the enhanced debris filter bottom nozzle of the invention is adapted to be used;
Fig. 2 is an enlarged elevational view, partly broken away and in section, of a conventional bottom nozzle such as typically employed with the kind of fuel assembly illustrated in Fig. 1;
Fig. 3 is a top plan view, as seen along line 3--3 of Fig. 2, showing the pattern of flow holes defined by the adapter plate of the conventional bottom nozzle;
Fig. 4 is a fragmentary top plan view of an enhanced debris filter bottom nozzle embodying the invention;
Fig. 5 is a longitudinal sectional view of a tubular section such as employed in forming the enhanced debris filter bottom nozzle of Fig. 4;
Fig. 6 is a longitudinal sectional view of a similar tubular section but one having a smaller diameter; and
Fig. 7 is a schematic top plan view of a modification of the enhanced debris filter bottom utilizing tubular sections all of which have substantially the same diameter.

In the following description, like reference characters designate like or corresponding parts throughout the several views, and terms such as "forward", "rearward", "left", "right", "upward", "downward" and the like, are used as words of convenience not to be construed as limiting terms.

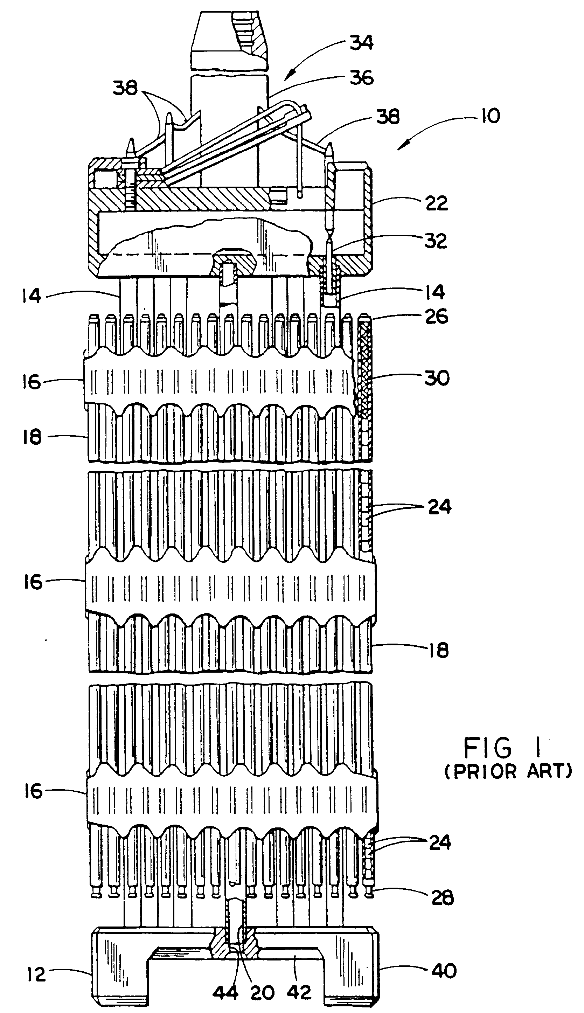

Referring now to the drawings, and to Fig. 1 in particular, the fuel assembly illustrated therein and generally designated with numeral 10 is of the type employed in pressurized-water reactors (PWR). Basically, it comprises a lower end structure or bottom nozzle 12 adapted to support the fuel assembly on the lower core plate (not shown) in the core region of a nuclear reactor (not shown), a plurality of control-rod guide tubes or thimbles 14 extending upwards from the bottom nozzle 12, transverse grids 16 spaced axially along the guide thimbles 14 and attached thereto, an organized array of elongate fuel rods 18 laterally supported by the grids 16 in spaced relationship with respect to each other, a centrally located instrumentation tube 20, and an upper end structure or top nozzle 22 removably attached to upper end portions of the guide thimbles 14. The fuel assembly 10 thus constructed forms an integral unit lending itself to being conventionally handled without risk of damage to its component parts.

Each of the fuel rods 18 is hermetically sealed at its opposite ends by means of end plugs 26 and 28, and it contains a stack of pellets 24 made of fissile material as well as a spring 30 disposed between the upper end plug 26 and the pellets 24 for the purpose of keeping the latter firmly stacked. As known, the fissile material of the fuel pellets 24 is the source of the reactive power generated during reactor operation, and liquid moderator/coolant, such as water or water containing boron, is pumped through the fuel assemblies within the core of the operating reactor in order to extract therefrom heat for the production of useful work.

The fissioning process is controlled by means of control rods 32 which are axially movable in the various guide thimbles 14 located at predetermined positions within the fuel assembly 10. The control rods 32 are supported from a rod cluster control mechanism 34 which is positioned above the top nozzle 22 and includes an internally threaded cylindrical member 36 having radial flukes or arms 38 each having connected thereto one of the control rod 32, the control mechanism 34 being operable to effect the desired control movements of the control rods in the various guide thimbles 14, all as well known in the art.

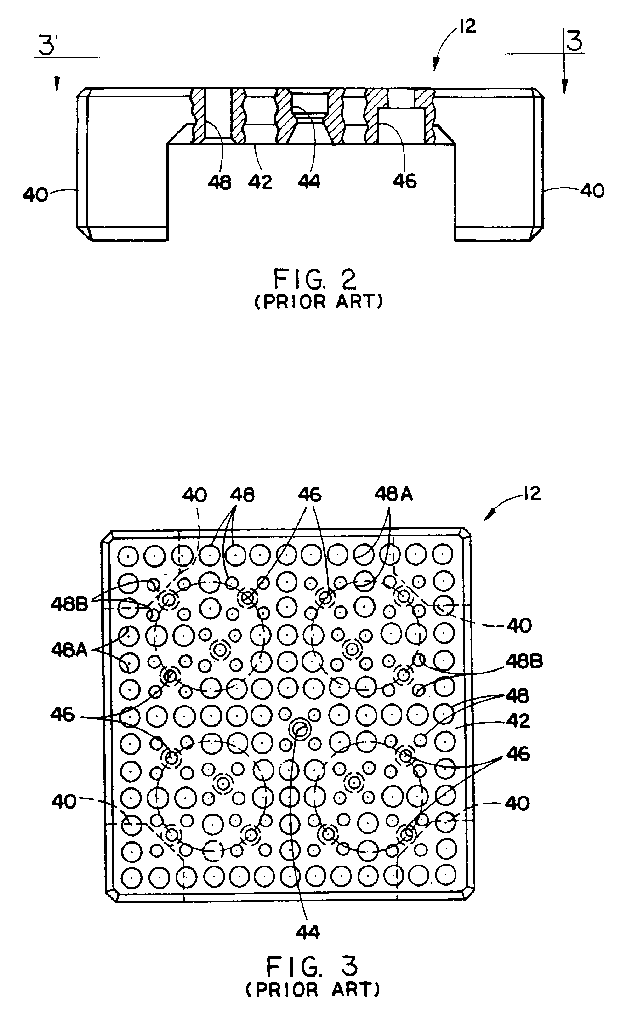

Referring now to Figs. 2 and 3, the conventional bottom nozzle 12 shown therein comprises a rectangular and substantially planar adapter plate 42, and corner legs 40 connected to the adapter plate for supporting the fuel assembly 10 on the lower core support plate (not shown) of a nuclear reactor.

The adapter plate 42 has formed therein a central opening 44 for receiving a lower end portion of the instrumentation tube 20 (Fig. 1), several openings 46 for receiving lower end portions of the respective guide thimbles 14, and a plurality of passages 48 for reactor coolant to flow therethrough. As is typical with conventional bottom nozzles of this type, there are flow passages 48A of a larger diameter, such as about 12.50 mm, and flow passages 48B of a smaller diameter, such as about 6.25 mm, both of which diameters are large enough to pass debris of damage-causing size.

As indicated hereinbefore, debris is of a damage-causing size if it can pass through the flow passages extending through the adapter plate of the bottom nozzle, and then becomes lodged in the lowermost support grid of the fuel assembly. Likewise as previously noted herein, EP-A-0 289 829 discloses a debris-filter bottom nozzle which, instead of featuring an array of relatively large flow passages, such as found in the conventional bottom nozzle of Fig. 3, is provided with a larger number of smaller flow passages capable of catching damage-causing debris without adversely affecting the coolant flow or pressure drop through the bottom nozzle adapter plate and across the fuel assembly, the flow passages in the embodiment illustrated and described in EP-A-0 289 829 having a substantially uniform cross-sectional size of about 4.8 mm and being distributed all over the adapter plate.

Whilst the debris filter bottom nozzle of EP-A-0 289 829 has proven to be highly successful, it has been found that in some instances it would be desirable to have available a bottom nozzle capable of filtering out debris of an even smaller size. Attempting to provide such an enhanced debris filter bottom nozzle by drilling through its adapter plate flow passages which are reduced in size to afford finer filtration and increased in number to compensate for the higher pressure drop across each reduced flow passage would be difficult and costly because thinner ligaments (the metal of the adapter plate left intact) between the holes would give the drill a tendency to wander from its desired position, and the drilling of flow holes through an adapter plate becomes more time-consuming and more expensive as the number of holes to be drilled and/or the thickness of the plate through which they are to be drilled increases. Moreover, there is a limit to the density of holes that can be drilled through the adapter plate of a bottom nozzle without detriment to its strength.

The present invention overcomes these limitations by constructing an enhanced debris filter bottom nozzle from a plurality of right cylindrical sections arrayed side-by-side to define a multitude of parallel flow passages, and rigidly joined to each other to consolidate the array of cylindrical sections into a plate-like structure constituting the transverse structure of the bottom nozzle.

More particularly, and with reference to Figs. 4-6, the enhanced debris filter bottom nozzle embodying the invention and designated herein generally with reference numeral 50 comprises the aforesaid transverse structure 52 constituted by the consolidated array of elongate cylindrical sections 54, and a peripheral frame or enclosure 56 perimetrically embracing the transverse structure 52 which occupies the open coolant flow space 58 defined by the enclosure 56 and is rigidly connected to the latter, the arrangement being such that the transverse structure extends fully across, and the cylindrical sections 54 extend axially in the direction of coolant flow through, the open flow space 58 of the enclosure 56.

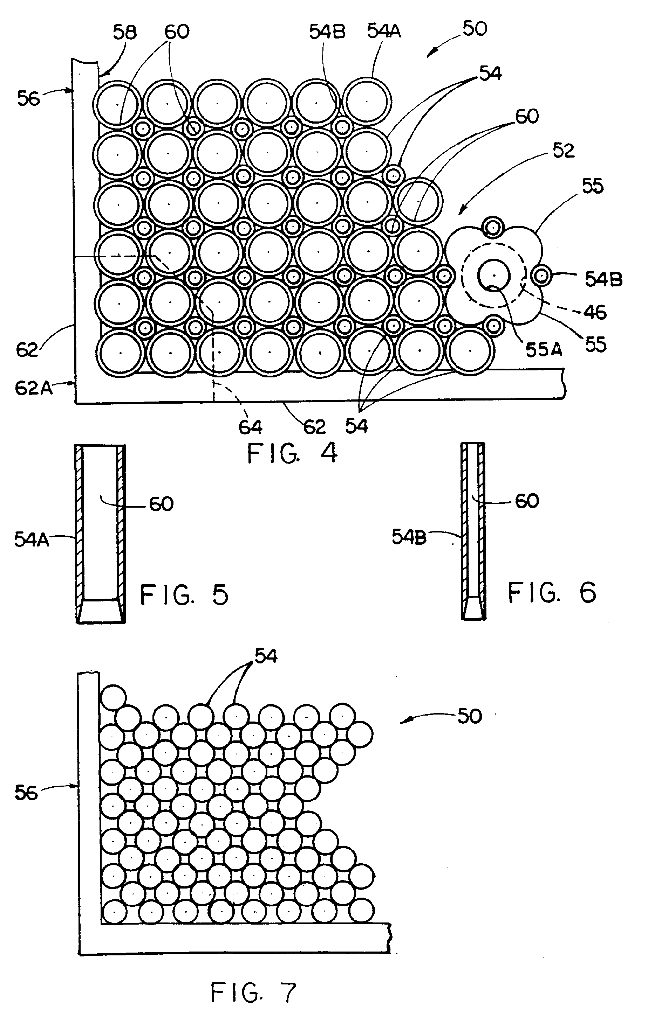

In the preferred embodiment shown in Figs. 4-6, the array of cylindrical sections 54 comprises tubular sections 54A of a larger diameter, and tubular sections 54B of a smaller diameter, each of the tubular sections 54A and 54B defining a coolant flow passage 60 which extends axially therethrough. In the modification of Fig. 7, the cylindrical sections 54 are tubular sections all having the same diameter. Preferably, the tubular sections 54, 54A, 54B are thin-walled tubes made of stainless steel and having chamfered ends, as seen from Figs. 5 and 6. The transverse structure 52 shown in Fig. 4 includes a solid bar member formed by four solid bar sections 55 rigidly joined cloverleaf-like and having a bore 55A drilled therethrough for receiving a lower end portion of one of the control-rod guide thimbles 14 (Fig. 1).

The open frame or peripheral enclosure 56 consists of interconnected side walls 62 extending around the transverse structure 52 which preferably has a smaller dimension than the enclosure 56 in the axial direction of the cylindrical sections 54, and may be about as thick as the adapter plate of the conventional debris filter bottom nozzle shown in Fig. 2. The peripheral enclosure 56 includes legs 64 for supporting the bottom nozzle 50 on the lower core plate (not shown) of a reactor, the legs 64 being connected to the enclosure 56 at the corners 62A formed by the side walls 62.

Preferably, the cylindrical sections 54, the peripheral enclosure 56, and the legs 64 are made of stainless steel and rigidly joined in a single operation. Thus, a preferred method of fabricating the enhanced debris filter bottom nozzle 50 would include fitting the array of cylindrical sections 54 into the flow space 58 defined by the peripheral enclosure 56, and then consolidating the whole assembly consisting of the enclosure 56 and the array of cylindrical sections 54 introduced therein, preferably by placing it into a furnace and subjecting it to a brazing operation during which brazing alloy on the cylindrical sections and in strategic areas on the walls 62 of the enclosure 56 is caused to melt and, upon solidification, to bind everything together.

## Claims

1. A debris filter bottom nozzle (50) in or for a fuel assembly (10) for a nuclear reactor, said bottom nozzle (50) including a transverse structure (52) having extending therethrough a plurality of coolant flow passages (60) small enough to prevent passage of debris of a predetermined size, characterized in that said transverse structure (52) consists of an array of cylindrical sections (54) disposed side-by-side in substantially parallel relationship with each other and rigidly connected together.

2. A debris filter bottom nozzle according to claim 1, characterized in that said cylindrical sections (54) are at least predominantly tubular sections each having one of said coolant flow passages (60) extending therethrough.

3. A debris filter bottom nozzle according to claim 2, characterized in that said cylindrical sections (54A, 54B) are of at least two different diametric sizes.

4. A debris filter bottom nozzle according to claim 2, characterized in that said cylindrical sections (54) are all of the same diametric size.

5. A debris filter bottom nozzle according to claim 2, 3 or 4, characterized in that said array includes a solid bar member (55) having formed therein a bore (55A) for receiving an end portion of a control-rod guide thimble (14).

6. A debris filter bottom nozzle according to any one of the preceding claims, characterized by a peripheral enclosure (56) defining an open coolant flow space (58), said transverse structure (52) being disposed within and extending across said coolant flow space (58), and being connected to said peripheral enclosure (56).

7. A debris filter bottom nozzle according to claim 6, characterized in that said transverse structure (52) has a smaller dimension than said peripheral enclosure (56) in the axial direction of said cylindrical sections (54).

8. A debris filter bottom nozzle according to claim 6 or 7, characterized in that said peripheral enclosure (56) and the cylindrical sections (54) are made of stainless steel.

9. A debris filter bottom nozzle according to claim 6, 7 or 8, characterized in that said peripheral enclosure (56) has supporting legs (64) for supporting the debris filter bottom nozzle in a nuclear reactor.

10. A method of fabricating the debris filter bottom nozzle claimed in any one of the preceding claims, characterized by the steps of first preassembling said array of cylindrical sections (54), and then rigidly bonding the whole assembly together in one single operation.

11. A method according to claim 10, characterized in that said operation is a brazing operation carried out in a furnace.

## Patentansprüche

1. Mit einem Teilchenfilter versehenes Fußstück (50) in einem oder für ein Kernreaktor-Brennelement (10), wobei das Fußstück (50) ein querverlaufendes Bauteil (52) mit einer Vielzahl von durch dieses hindurchverlaufenden Kühlmitteldurchtrittsöffnungen (60)aufweist, die klein genug sind, um den Durchtritt von Teilchen einer vorgegebenen Größe zu verhindern, dadurch gekennzeichnet, daß das querverlaufende Bauteil (52) aus einer Anordnung von Zylinderabschnitten (54) besteht, die im wesentlichen parallel nebeneinander angeordnet und miteinander starr verbunden sind.

2. Fußstück mit Teilchenfilter nach Anspruch 1, dadurch gekennzeichnet, das die Zylinderabschnitte (54) wenigstens weitgehend Rohrabschnitte sind, die jeweils eine der genannten Kühlmitteldurchtrittsöffnungen (60) bilden.

3. Fußstück mit Teilchenfilter nach Anspruch 2, dadurch gekennzeichnet, das die Zylinderabschnitte (54A, 54B) in mindestens zwei verschieden großen Durchmessern vorliegen.

4. Fußstück mit Teilchenfilter nach Anspruch 2, dadurch gekennzeichnet, das die Zylinderabschnitte (54) alle den gleichen Durchmesser haben.

5. Fußstück mit Teilchenfilter nach Anspruch 2, 3 oder 4, dadurch gekennzeichnet, daß die genannte Anordnung ein massives Stabelement (55) mit einer darin gebildeten Bohrung (55A) zur Aufnahme eines Endteils eines Steuerstab-Führungsrohrs (14) enthält.

6. Fußstück mit Teilchenfilter nach einem der vorhergehenden Ansprüche, gekennzeichnet durch einen umfangsmäßigen Rahmen (56), der einen offenen Kühlmittelströmungsraum (58) bildet, wobei das guerverlaufende Bauteil (52) in diesem Kühlmittelströmungsraum (58) sich durch diesen hindurch erstrekkend angeordnet und mit dem Umfangsrahmen (56) verbunden ist.

7. Fußstück mit Teilchenfilter nach Anspruch 6, dadurch gekennzeichnet, daß das querverlaufende Bauteil (52) in Axialrichtung der Zylinderabschnitte (54) eine kleinere Abmessung als der Umfangsrahmen (56) hat.

8. Fußstück mit Teilchenfilter nach Anspruch 6 oder 7, dadurch gekennzeichnet, das der Umfangsrahmen (56) und die Zylinderabschnitte (54) aus rostfreiem Stahl hergestellt sind.

9. Fußstück mit Teilchenfilter nach Anspruch 6, 7 oder 8, dadurch gekennzeichnet, daß der Umfangsrahmen (56) Stützfüße (64) aufweist, um das Fußstück mit Teilchenfilter in einem Kernreaktor abzustützen.

10. Verfahren zur Herstellung des Fußstücks mit Teilchenfilter nach einem der vorhergehenden Ansprüche, gekennzeichnet durch die Schritte eines zunächst erfolgenden Vorzusammensetzens der Anordnung aus Zylinderabschnitten (54) und des anschließenden starren Verbindens der gesamten zusammengesetzten Anordnung in einem einzigen Arbeitsgang.

11. Verfahren nach Anspruch 10, dadurch gekennzeichnet, daß der genannte Arbeitsgang ein in einem Ofen durchgeführter Hartlötvorgang ist.

## Revendications

1. Embout inférieur (50) à filtrage de débris dans ou pour un assemblage de combustible (10) destiné à un réacteur nucléaire, ledit embout inférieur (50) comportant une structure transversale (52) traversée par une pluralité de passages (60) pour l'écoulement du fluide caloporteur qui soient assez petits pour empêcher le passage de débris d'une taille prédéterminée, caractérisé en ce que ladite structure transversale (52) est constituée d'un réseau de parties cylindriques (54) , disposées côte à côte et sensiblement parallèlement les unes aux autres, et reliées rigidement ensemble.

2. Embout inférieur à filtrage de débris suivant la revendication 1, caractérisé en ce que lesdites parties cylindriques (54) sont, au moins de façon prédominante, des parties tubulaires dont chacune est traversée par l'un desdits passages (60) pour l'écoulement du fluide caloporteur.

3. Embout inférieur à filtrage de débris suivant la revendication 2, caractérisé en ce que lesdites parties cylindriques (54A, 54B) ont au moins deux tailles différentes de diamètre.

4. Embout inférieur à filtrage de débris suivant la revendication 2, caractérisé en ce que lesdites parties cylindriques (54) ont toutes la même taille de diamètre.

5. Embout inférieur à filtrage de débris suivant la revendication 2, 3 ou 4, caractérisé en ce que ledit réseau inclut un élément (55) massif formant une barre dans lequel est formé un alésage pour recevoir une partie d'extrémité d'une chaussette de guidage (14) pour barre de commande.

6. Embout inférieur à filtrage de débris suivant l'une quelconque des revendications précédentes, caractérisé par une enceinte périphérique (56) délimitant un espace (58) ouvert pour l'écoulement du fluide caloporteur, ladite structure transversale (52) étant disposée à l'intérieur, s'étendant à travers ledit espace (58) pour l'écoulement du fluide caloporteur et étant reliée à ladite enceinte périphérique (56).

7. Embout inférieur à filtrage de débris suivant la revendication 6, caractérisé en ce que ladite structure transversale (52) présente une dimension inférieure à celle de ladite enceinte périphérique (56) suivant la direction axiale desdites parties cylindriques (54).

8. Embout inférieur à filtrage de débris suivant la revendication 6 ou 7, caractérisé en ce que ladite enceinte périphérique (56) et les parties cylindriques (54) sont faites d'acier inoxydable.

9. Embout inférieur à filtrage de débris suivant la revendication 6, 7 ou 8, caractérisé en ce que ladite enceinte périphérique (56) comporte des jambes de support (64) pour soutenir l'embout inférieur à filtrage de débris dans un réacteur nucléaire.

10. Procédé de fabrication d'un embout inférieur à filtrage de débris conforme à l'une quelconque des précédentes revendications, caractérisé par les étapes de préassemblage préalable dudit réseau de parties cylindriques (54) suivi de la liaison rigide de l'assemblage complet en une seule opération.

11. Procédé suivant la revendication 10, caractérisé en ce que ladite opération est une opération de brasage réalisée dans un four.
